# EUROPÄISCHE PATENTSCHRIFT

(11) **EP 2 033 504 B1**
(45) Veröffentlichungstag und Bekanntmachung des Hinweises auf die Patenterteilung: **19.06.2013**
(21) Anmeldenummer: 08014008.0
(22) Anmeldetag: 05.08.2008
(51) Int. Cl.: A01B 3/421, A01B 3/46

(54) **Anbaupflug**
Mounted plough
Charrue portée

(30) Priorität: 10.09.2007 DE 102007042962
(43) Veröffentlichungstag der Anmeldung: 11.03.2009
(73) Patentinhaber: Alois Pöttinger Maschinenfabrik Ges.m.b.H., 4710 Grieskirchen (AT)
(72) Erfinder: Hehenberger, Martin, 4070 Eferding (AT)
(74) Vertreter: Thoma, Michael

(56) Entgegenhaltungen:
- WO-A1-2004/032601

## Beschreibung

Die vorliegende Erfindung betrifft einen Anbaupflug mit einem an einem Schlepper anbaubaren Anbaubock, der einen Pflugschare tragenden Pflugrahmen trägt und Ober- und Unterlenkeranlenkpunkte zur Befestigung von am Schlepper befestigten Ober- und Unterlenkern aufweist, mittels derer der Anbaubock mit dem davon getragenen Pflugrahmen nebst Pflugscharen durch den Schlepper am Vorgewende und/oder zum Transport vom Boden ausgehoben wird.

Anbaupflüge zeichnen sich im Gegensatz zu Aufsattelpflügen dadurch aus, dass der Pflugrahmen mit den darin befestigten Pflugscharen am Vorgewende oder auch zum Transport durch Anheben des Anbaubocks gänzlich vom Boden ausgehoben werden kann, so dass ein üblicherweise am Rahmenheck angeordnetes Stützrad, das der Pflugtiefenbegrenzung und -einstellung dient, vom Boden abgehoben wird. Um den Anbaupflug dergestalt ausheben zu können, ist der Anbaubock mit dem Pflugrahmen starr verbunden, zumindest bezüglich einer liegenden Querachse, so dass Hub- und Kippbewegungen des Anbaubocks, die über die Dreipunktanlenkung vom Schlepper her erzeugt werden, zu einem Anheben und Ausheben des Anbaupflugs führen.

Um bei derartigen Anbaupflügen eine Bodenanpassung zu ermöglichen, und beim Überfahren von Bodenmulden oder Bodenkuppen kein zu tiefes Eingraben bzw. ein ungewolltes Ausheben des Pflugs zu vermeiden, wird herkömmlicherweise der Oberlenker der Dreipunktanlenkung pflugseitig mit seinem Anlenkpunkt in einem Langloch gefahren, so dass der Oberlenker gegenüber dem Anbaubock in der abgesenkten Betriebsstellung Spiel hat, was dem Anbaupflug beim Überfahren von Bodenkuppen eine begrenzte Wippbarkeit gegenüber dem Schlepper gibt, die die gewünschte Bodenanpassung ermöglicht. Dieses Spiel der Anlenkung des Anbaupflugs im Pflugbetrieb verhindert jedoch eine Gewichtsübertragung vom Pflug auf den Schlepper, die an sich erwünscht wäre, um einerseits gerade bei weichen Böden das Abstützrad des Pfluges nicht zu stark zu belasten und andererseits vor allen Dingen zusätzliches Gewicht auf die Hinterräder des Schleppers zu geben, um dessen Traktion zu verbessern.

Um dieser Problematik zu begegnen, wurde bereits vorgeschlagen, anstelle eines herkömmlichen Oberlenkers einen längenveränderbaren Hydraulikzylinder als Oberlenker zu verwenden, der einerseits die gewünschten Bodenanpassbewegungen zulässt und durch Längenveränderung ausgleicht. Andererseits kann mit Hilfe der Schlepperhydraulik ein solcher Oberlenker auf Zug vorgespannt werden, wodurch auch im Pflugbetrieb eine permanente Gewichtsentlastung des Pflughecks erreicht wird, die im Gegenzug als Reaktionskraft die Hinterräder des Schleppers stärker belastet und die Traktion erhöht. Ein solches System zur Traktionserhöhung ist beispielsweise in Landtechnik 6/2005, Seite 330 unter dem Titel "Gewichtsübertragung vom Anbaupflug auf den Traktor" von Oberhaus et al. beschrieben. Die Zugkraft im hydraulischen Oberlenker ist mittels einer am Schlepper vorgesehenen Druckregelung einfach wirkend geregelt, so dass die Radlast vom Fahrersitz aus eingestellt werden kann. Bei einem derartigen, druckgeregelten Traktionserhöhungssystem ist jedoch die Abstimmung zwischen Schlepper und Anbaupflug problematisch, da die Druckregelung für den hydraulischen Oberlenker exakt auf den jeweiligen Anbaupflug abzustimmen ist, was die Schlepperhersteller vor nicht unerhebliche Probleme stellt, da selbstverständlich ein bestimmter Schleppertyp von verschiedenen Käufern mit verschiedenen Anbaupflügen betrieben wird. Zudem sind bereits vorhandene Schlepper, die in Betrieben üblicherweise durchaus einige Jahre alt sein können, nicht ohne weiteres in der gewünschten Weise nachrüstbar, um eine solche Zugkraftregelung im Oberlenker für einen Anbaupflug bereit stellen zu können.

Ein ähnliches System zur Traktionserhöhung ist an sich auch bereits bei Aufsattelpflügen vorgeschlagen worden, wie sie z.B. in der EP 1731009 A1 beschrieben sind. Auch dort ist der Anbaubock mittels eines als Hydraulikzylinder ausgebildeten, längenveränderbaren Oberlenker am Schlepper angelenkt, der über eine entsprechende Drucksteuervorrichtung vorgespannt wird, um den Anbaupflug gewichtsmäßig zu entlasten und entsprechendes Gewicht zusätzlich auf die Antriebsräder des Schleppers zu geben. Die Drucksteuereinheit ist dort jedoch durch die grundsätzlichen gattungsmäßigen Unterschiede zwischen Aufsattelpflug und Anbaupflug anders ausgelegt, da ein Ausheben des Pfluges nicht vorgesehen ist. Der Pflugrahmen ist permanent auf einer Deichsel abgestützt, die mit einem Nachlauffahrwerk am Boden abgestützt ist und andererseits am Anbaubock angelenkt ist. Das Fahrwerk des Aufsattelpfluges bleibt insbesondere auch beim Wenden und beim Transport am Boden, so dass die Anlenkung und insbesondere auch der hydraulisch vorspannbare Oberlenker-Hydraulikzylinder nicht für ein Ausheben des Pflugs vom Boden ausgelegt ist. Hiervon abgesehen bestehen auch hinsichtlich dieses vorbekannten Pflugs die oben erwähnten Probleme, die eine Auslegung der Schlepperhydraulik und deren Drucksteuerung für den jeweiligen Pflug erfordern.

Aus der WO 2004/032601 A1 ist ein Aufsattelpflug bekannt, bei dem der Anbaubock durch eine Vorspannvorrichtung gegenüber dem Pflugrahmen vorgespannt wird, wobei die Vorspannkraft so beschaffen sein soll, dass der Pflugrahmen zusätzlich zu seinem Eigengewicht auf den Boden gedrückt wird, um einen Teil des Gewichts auf die Vorderachse des Schleppers zu verlagern.

Der vorliegenden Erfindung liegt die Aufgabe zugrunde, einen verbesserten Anbaupflug der eingangs genannten Art zu schaffen, der die Nachteile des Standes der Technik vermeidet und Letzteren in vorteilhafter Weise weiterbildet. Insbesondere soll der Anbaupflug mit einfachen Mitteln eine Traktionserhöhung am Schlepper ermöglichen, ohne eine bestimmte Ausbildung der Schlepperhydraulik zu bedingen.

Erfindungsgemäß wird diese Aufgabe durch einen Anbaupflug gemäß Anspruch 1 gelöst. Bevorzugte Ausgestaltungen der Erfindung sind Gegenstand der abhängigen Ansprüche.

Es wird vorgeschlagen, die Vorspannvorrichtung zur Gewichtsentlastung des Pflugs und Gewichtsbelastung des Schleppers und dessen Antriebsräder pflugseitig vorzusehen und in den Anbaubock zu integrieren, so dass ein hydraulisch vorspannbarer Oberlenker und eine Drucksteuerung vom Schlepper her nicht notwendig ist, was gleichwohl jedoch möglich bliebe. Erfindungsgemäß ist zumindest einer der Ober- und Unterlenkeranlenkpunkte des Anbaubocks des Pflugs mittels einer Anlenkpunktlagervorrichtung gegenüber dem Anbaubock beweglich gelagert, wobei eine Vorspannvorrichtung zur elastischen Vorspannung des beweglich gelagerten Anlenkpunkts gegenüber dem Anbaubock in eine Entlastungsstellung vorgesehen ist, in der in der abgesenkten Arbeitsstellung des Pfluges das Pflugheck dadurch die Vorspannkraft der Vorspannvorrichtung entlastet wird. Die bewegliche Anordnung des Anlenkpunkts am Anbaubock und dessen gleichzeitige Vorspannung in eine den Oberlenker auf Zug spannende Stellung erlaubt einerseits die notwendigen Bodenanpassbewegungen des Pfluges beim Überfahren von Bodenwellen, andererseits wird der Oberlenker permanent auf Zug gefahren, wodurch im Arbeitsbetrieb des Pflugs permanent eine Gewichtsübertragung vom Pflug auf die Hinterräder des Schleppers und damit eine Traktionserhöhung erfolgt. Die Vorspannkraft, die im Pflugbetrieb das hintere Pflugende sozusagen leicht anzuheben versucht, bewirkt über die Mehrpunktanlenkung am Schlepper eine Reaktionskraft, die dessen Antriebsräder nach unten drückt, wodurch sich die Traktion erhöht. Dies bringt neben einer generellen Zugkraft- und Leistungserhöhung eine bessere Schlepperauslastung mit sich. Der Schlupf wird verringert, wodurch Treibstoff gespart und der Boden geschont wird. Durch die Integration der Vorspannvorrichtung in den Pflug kann die Traktionserhöhung am Schlepper unabhängig von dessen Ausbildung erreicht werden. Der Schlepper selbst braucht nicht in spezieller Weise an den Pflug adaptiert zu werden. Insbesondere können auch ältere Schleppermodelle mit herkömmlichen Oberlenkern, die nicht hydraulisch vorspannbar sind, hinsichtlich Traktion und Zugkraft verbessert werden.

Zur Erreichung der gewünschten Gewichtsübertragung können grundsätzlich die beiden Unterlenkeranlenkpunkte am Anbaubock beweglich gelagert sein, wobei die Vorspannvorrichtung in diesem Fall die beiden Unterlenkeranlenkpunkte sozusagen auf die Unterlenker zu spannen würde, um in den Unterlenkern eine Druckkraft und umgekehrt im Oberlenker eine Zugkraft zu erzeugen. In bevorzugter Weiterbildung der Erfindung jedoch ist der Oberlenkeranlenkpunkt beweglich am Anbaubock gelagert, was den Vorteil mit sich bringt, dass nur ein Anlenkpunkt beweglich gelagert zu sein braucht. Die sich am Anbaubock abstützende Vorspannvorrichtung, die mit dem beweglich gelagerten Anlenkpunkt in Wirkverbindung steht, spannt den genannten Oberlenkeranlenkpunkt in eine Richtung vom Oberlenker weg bzw. auf den Pflugrahmen zu, so dass im Oberlenker während des Pflugbetriebs permanent eine Zugkraft induziert wird.

Die Anlenkpunkt-Lagervorrichtung zur beweglichen Lagerung des Anlenkpunktes am Anbaubock weist dabei insbesondere eine Lagerwippe auf, die an dem Anbaubock um eine Wippachse schwenkbar gelagert ist und an einem von der Wippachse beabstandeten Wippenabschnitt den beweglichen Anlenkpunkt trägt. Durch Wippen der genannten Lagerwippe erfährt der Anlenkpunkt eine entsprechende Verstellung gegenüber dem Anbaubock, was einerseits auch bei starrem Oberlenker die Bodenanpassbewegungen des Anbaupfluges zulässt und im Zusammenspiel mit der vorgenannten Vorspannvorrichtung das permanente Fahren des Oberlenkers auf Zug auch während des Pflugbetriebs ermöglicht, um die gewünschte Gewichtsübertragung auf die Hinterräder des Schleppers zu erreichen. Die Wippachse ist dabei in Weiterbildung der Erfindung insbesondere eine liegende Querachse, so dass die Lagerwippe am Anbaubock parallel zu den Nickbewegungen des Anbaupfluges beim Überfahren von Bodenwellen schwenken kann.

Die Vorspannvorrichtung greift dabei vorteilhafterweise einerseits an dem Anbaubock bzw. einem damit starr verbundenen Lagerstück an und ist andererseits vorteilhafterweise direkt mit der genannten Lagerwippe verbunden, so dass die Vorspannvorrichtung direkt zwischen Anbaubock und Lagerwippe wippt. Hierdurch kann ein direkter Kraftfluss zwischen Lagerwippe und Anbaubock erreicht werden, zudem wird ein einfacher und Platz sparender Aufbau erzielt.

Eine besonders Platz sparende Anordnung kann hierbei dadurch erreicht werden, dass die Lagerwippe in Richtung der Wippachse betrachtet nach Art eines Kniehebels ausgebildet ist, der zwei zu einander abgewinkelte Schenkel aufweist und im Bereich seines Verbindungsabschnittes zwischen den beiden Schenkeln die vorgenannte Wippachse aufweist. An dem Ende des einen Schenkels greift die Vorspannvorrichtung an, während an dem Ende des anderen Schenkels der Anlenkpunkt insbesondere für den Oberlenker vorgesehen ist. Die kniehebelartige Ausbildung der Lagerwippe erlaubt eine besonders kompakte Ausbildung, die die Baumaße des Anbaubocks insgesamt kaum vergrößert. Insbesondere kann hierbei vorgesehen sein, dass der an der Lagerwippe vorgesehene Anlenkpunkt in dem Langloch läuft, in dem herkömmlicherweise der Oberlenkeranlenkpunkt herkömmlicher Anbaupflüge ohne Vorspannvorrichtung mit Spiel geführt wird.

Alternativ zu einer solchen als Kniehebel ausgebildeten Lagerwippen kann auch ein Schlitten vorgesehen sein, der am Anbaubock verschieblich und ggf. auch schwenkbar gelagert ist und einerseits den beweglichen Anlenkpunkt trägt sowie andererseits mit der Vorspannvorrichtung verbunden ist, die sich am Anbaubock abstützen kann, um den Schlitten in die gewünschte Stellung vorzuspannen.

Die Vorspannvorrichtung kann grundsätzlich verschieden ausgebildet und angeordnet sein, beispielsweise kann eine mechanische Feder als Vorspannvorrichtung Verwendung finden. Ggf. könnte auch die vorgenannte Lagerwippe selbst federnd ausgebildet sein. Nach einer vorteilhaften Ausführung kann die Steuereinrichtung hydraulisch ausgebildet sein, insbesondere einen Druckspeicher sowie zwischen Druckspeicher und Druckmittelzylinder angeordnete Drucksteuer- und/oder - regelventile besitzen, die in Abhängigkeit relevanter Betriebsparameter ansteuerbar sind. Dies kann durch hydraulische Steuermittel erfolgen. Alternativ kann die Vorspannvorrichtung auch elektronisch oder elektro-hydraulisch arbeitend ausgebildet sein.

In bevorzugter Weiterbildung der Erfindung umfasst die Vorspannvorrichtung einen Druckmittelzylinder, der von einer Fluiddruckquelle vorspannbar ist. Um eine besonders Platz sparende Anordnung zu erreichen, kann der Druckmittelzylinder in einer im Wesentlichen aufrechten Ausrichtung im Wesentlichen parallel zu einer Hauptachse des Anbaubocks angeordnet sein, insbesondere dann, wenn die Lagerwippe in der vorgenannten Weise als Kniehebel ausgebildet ist. Hierbei kann sich der eine Schenkel der Lagerwippe, der den Anlenkpunkt trägt, im Wesentlichen aufrecht erstrecken, während der andere Schenkel der Lagerwippe eine liegende Ausrichtung einnimmt. An dem besagten liegenden Schenkel der Lagerwippe greift der Vorspannzylinder an, der sich in aufrechter Ausrichtung mit seinem anderen Ende an einem anbaubockfesten Punkt abstützt.

In besonders vorteilhafter Weise können die genannte Lagerwippe und die genannte Vorspannvorrichtung einen Nachrüstsatz für einen Anbaupflug bilden, mittels dessen ein an sich herkömmlicher Anbaupflug in einfacher Weise umgerüstet werden kann, um eine Traktionserhöhung am Schlepper zu erzeugen. Die Lagerwippe wird hierzu mit ihrer Schwenkachse am Anbaubock montiert, wobei der an der Lagerwippe vorgesehen Anlenkpunkt den am Anbaubock selbst vorgesehenen Anlenkpunkt für den Oberlenker ersetzt. Zusätzlich zu der Lagerwippe wird lediglich die damit verbundene Vorspannvorrichtung ebenfalls am Anbaubock befestigt, so dass sich die genannte Vorspannvorrichtung einerseits am Anbaubock und andererseits an der Lagerwippe abstützt. In besonders vorteilhafter Weise ist dabei die Lagerwippe derart ausgebildet, dass sich der daran vorgesehen Anlenkpunkt in dem Langloch erstreckt, in dem an sich die mit Spiel versehene Anlenkung der Oberlenkers ansonsten vorgesehen würde. Durch einen solchen Nachrüstsatz umfassend die Lagerwippe und die Vorspannvorrichtung kann in einfacher Weise ein an sich herkömmlicher Anbaupflug rasch umgerüstet werden, um eine Traktionserhöhung am Schlepper zu erzielen. Eine besondere Ausbildung des Schleppers oder der Schlepperhydraulik ist hierzu nicht erforderlich.

Um die Traktionskraft je nach Bodenbeschaffenheit und/oder Pflugabstimmung an die Gegebenheiten anpassen zu können, ist in Weiterbildung der Erfindung eine Einstellvorrichtung zur Einstellung der zwischen dem Anbaubock und dem beweglich gelagerten Anlenkpunkt wirkenden Vorspannkraft vorgesehen. Wird die Vorspannvorrichtung von einer mechanischen Feder gebildet, kann beispielsweise eine Federstellschraube in einfachster Ausführung einer solchen Einstellvorrichtung vorgesehen sein. Insbesondere ist jedoch in Weiterbildung der Erfindung eine Hydraulikdruckeinstellvorrichtung, insbesondere ein Hydraulikdruckregler vorgesehen, mit Hilfe dessen der auf den Vorspannzylinder wirkende Hydraulikdruck gesteuert werden kann.

In einfacher Ausführung der Erfindung kann die Einstellvorrichtung manuell betätigbar sein dahingehend, dass eine gewünschte Vorspannkraft einstellbar ist. Gemäß einer bevorzugten, höher entwickelten Ausführung ist die Einstellvorrichtung automatisch arbeitend ausgebildet, insbesondere derart, dass sie eine Steuereinrichtung zur Veränderung der Vorspannkraft in Abhängigkeit eines Antriebsradschlupfes des Schleppers und/oder in Abhängigkeit eines den Antriebsradschlupf beeinflussenden Betriebsparameters aufweist.

Die Steuereinrichtung kann hierbei grundsätzlich verschieden ausgebildet sein. Nach einer vorteilhaften Ausführung kann die Steuereinrichtung hydraulisch ausgebildet sein, insbesondere einen Druckspeicher sowie zwischen Druckspeicher und Druckmittelzylinder angeordnete Drucksteuer- und/oder -regelventile besitzen, die in Abhängigkeit relevanter Betriebsparameter ansteuerbar sind. Alternativ kann die Steuervorrichtung auch elektronisch oder elektro-hydraulisch arbeitend ausgebildet sein. Die Steuereinrichtung umfasst hierbei vorteilhafterweise Erfassungsmittel zur Erfassung des genannten Betriebsparameters, der den Antriebsradschlupf beeinflusst, wobei die Erfassungsmittel auch direkt Radschlupf-Erfassungsmittel sein können, die direkt den Radschlupf der Antriebsräder des Schleppers erfassen, beispielsweise durch Differenzbildung zwischen Fahrgeschwindigkeit und Radumfangsgeschwindigkeit. Alternativ oder zusätzlich können auch den Radschlupf beeinflussende Betriebsparameter wie zusätzliche Radbelastung und/oder Pfluggewichtsentlastung erfasst werden. Beispielsweise kann die Zugkraft im Oberlenker bestimmt werden und/oder die Vorspannkraft im Vorspannzylinder. Die Steuereinrichtung regelt daraufhin den Hydraulikdruck für den Vorspannzylinder derart, dass sich ein minimaler Radschlupf ergibt. Insbesondere kann die genannte Steuereinrichtung Steuermittel aufweisen, die die Vorspannkraft mit zunehmendem Radschlupf am Schlepper und/oder mit zunehmender Pflugzugkraft erhöhen, um den zunehmenden Radschlupf bzw. die zunehmende Pflugzugkraft durch eine entsprechende Traktionserhöhung zu kompensieren. Die genannten Steuermittel können beispielsweise einen Regler zu Regelung des Radschlupfs durch Einstellung der Vorspannkraft aufweisen.

Die vorliegende Erfindung wird nachfolgend anhand bevorzugter Ausführungsbeispiele und zugehöriger Zeichnungen näher erläutert. In den Zeichnungen zeigen:
- Fig. 1: Eine schematische Seitenansicht eines an einen Schlepper angebauten Anbaupflugs nach einer vorteilhaften Ausführung der Erfindung,
- Fig. 2: eine ausschnittsweise, vergrößerte Seitenansicht des Anbaubocks des Anbaupflugs aus Fig. 1, die die Lagerwippe für den Oberlenkeranlenk- punkt und den die Lagerwippe vorspannenden Hydraulikzylinder zeigt,
- Fig. 3: eine ausschnittsweise, perspektivische Ansicht des Anbaubocks aus Fig. 2, die die Anordnung der genannten Lagerwippe und des Vorspann- zylinders schräg von vorne zeigt, und
- Fig. 4: eine schematische Seitenansicht des Anbaubocks des Anbaupflugs aus Fig. 1 einer anderen Ausführung der Lagerwippe und einer anderen An- ordnung des Vorspannzylinders nach einer alternativen Ausführung der Erfindung.

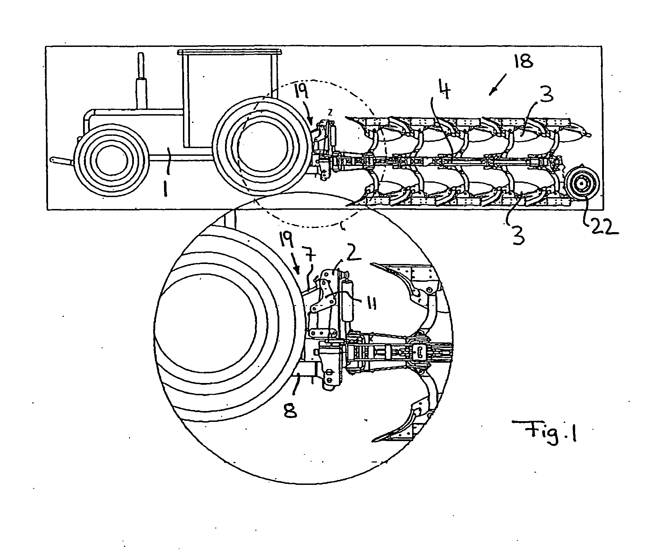

Der in Fig. 1 gezeigte Anbaupflug 18 ist mittels einer Dreipunktanlenkung 19 umfassend den Oberlenker 7 und zwei Unterlenker 8 an den Schlepper 1 angebaut, der den Anbaupflug 18 zieht. Wie die vergrößerte Darstellung Z der Fig. 1 zeigt, die ausschnittsweise den Anbaubereich des Anbaupflugs 18 vergrößert, umfasst der Anbaupflug 18 einen Anbaubock 2, der in Form eines Blechprofilrahmens bzw. - gestells ausgebildet sein kann und im Wesentlichen eine aufrechte Hauptachse besitzt. Der Anbaubock 2 umfasst zwei seitliche, voneinander beabstandete Unterlenkeranlenkpunkte 6, die am unteren Ende des Anbaubocks 2 angeordnet sind, sowie einen zentralen, mittig angeordneten Oberlenkeranlenkpunkt 5, der im Bereich des oberen Endes des Anbaubocks 2 an diesem angreift. An den genannten Anlenkpunkten 5 und 6 greifen der Oberlenker 7 sowie die beiden Unterlenker 8 des Schleppers 1 an, die mit den genannten Anlenkpunkten 5 und 6 gelenkig bzw. schwenkbar um liegende Querachsen verbunden sind.

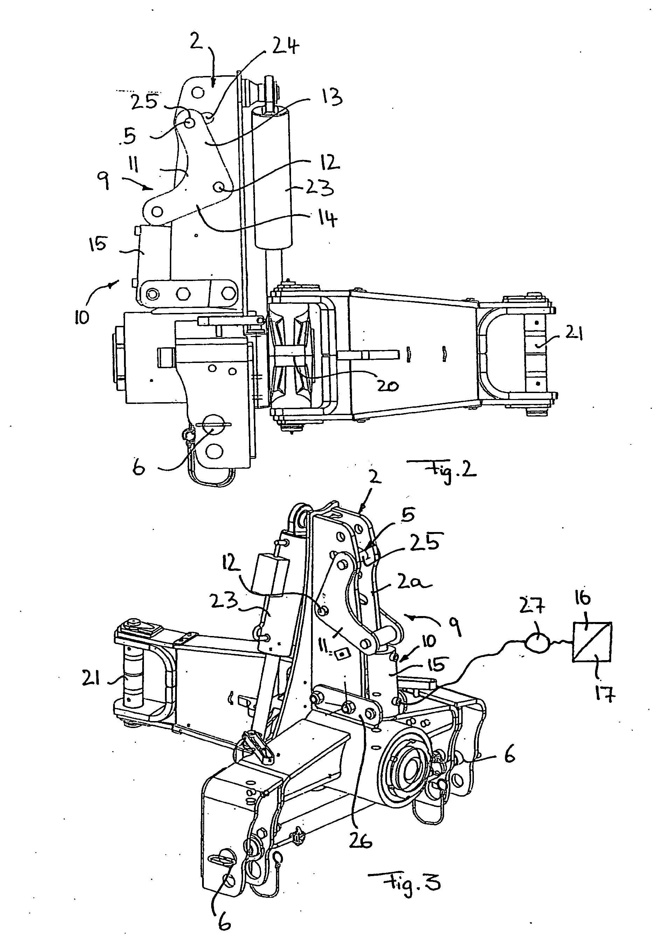

Der Anbaupflug 18 umfasst des Weiteren einen Pflugrahmen 4, der zwei Reihen von Pflugscharen 3 trägt, die auf gegenüberliegenden Seiten des Pflugrahmens 4 angeordnet sind. Der Pflugrahmen 4 ist an dem Anbaubock 2 befestigt und wird von diesem getragen. Der Pflugrahmen 4 ist dabei als Wenderahmen ausgebildet, d.h. er kann um eine liegende, in Fahrtrichtung weisende Wendeachse 20 gedreht werden, so dass wahlweise die eine Reihe von Pflugscharen 3 oder die andere Reihe von Pflugscharen 3 zum Einsatz kommt. Zusätzlich kann der Pflugrahmen 4 um eine aufrechte Pendelachse 21 pendelnd aufgehängt sein, vgl. Fig. 2, um entsprechend schräg angestellt zu werden. Indes ist der Pflugrahmen 4 anders als bei Aufsattelpflügen gegenüber dem Anbaubock 2 bezüglich einer liegenden Querachse starr angelenkt, so dass durch Anheben bzw. nach vorne Kippen des Anbaubocks 2 der gesamte Pflugrahmen 4 nebst den Pflugscharen 3 vom Boden ausgehoben werden kann, beispielsweise um am Vorgewende den Pflug in der vom Boden ausgehobenen Stellung wenden zu können.

Wie Fig. 1 zeigt, ist am hinteren Ende des Pflugrahmens 4 ein Stützrad 22 vorgesehen, das der Tiefenführung des Pfluges dient. Beim Ausheben des Pflugs wird dieses zusammen mit dem Pflugrahmen 4 vom Boden ausgehoben. Das zuvor genannten Wenden des Pflugrahmens 4 um die liegende, in Fahrtrichtung weisende Wendeachse 20 wird mittels eines Wendeantriebs 23 in Form eines Hydraulikzylinders bewerkstelligt, vgl. Fig. 1 und 3.

Wie die Fig. 2 und 3 zeigen, ist der Oberlenkeranlenkpunkt 5 des Anbaubocks 2 nicht direkt an diesem starr befestigt, sondern mittels einer Anlenkpunktlagervorrichtung 9 beweglich gelagert. Diese Anlenkpunktlagervorrichtung 9 umfasst eine Lagerwippe 11, die in der gezeichneten Ausführung nach Art eines Kniehebels ausgebildet ist und zwei zueinander abgewinkelte Wippenschenkel 13 und 14 aufweist. Die genannte Lagerwippe 11 ist dabei im Bereich des Verbindungsabschnitts zwischen den beiden Wippenschenkeln 13 und 14 um die Wippachse 12 schwenkbar an dem Anbaubock 2 schwenkbar gelagert, wobei sich die genannte Wippachse 12 quer zur Fahrtrichtung erstreckt und liegend ausgerichtet ist. Wie die Fig. 2 und 3 zeigen, besteht die genannte Lagerwippe 11 vorteilhafterweise aus zwei miteinander verbundene Profilplatten, die den turm- bzw. trägerförmigen Anbaubock 2 zwischen sich aufnehmen, so dass die genannten Platten der Lagerwippe 11 an den Außenseiten des Anbaubocks 2 geführt sind.

Wie Fig. 2 zeigt, umfasst der Anbaubock 2 an seinem oberen Endabschnitt ein Langloch 24, das sich - grob gesprochen - etwa in Richtung des Oberlenkers 7 erstreckt. Die genannte Lagerwippe 11 überdeckt mit ihrem oberen Kopfabschnitt des Wippenschenkels 13 das genannte Langloch 24, so dass ein den Oberlenkeranlenkpunkt 5 bildender Anlenkbolzen 25, der starr an der Lagerwippe 11 befestigt ist, in dem genannten Langloch 24 laufen kann. Der den Anlenkbolzen 25 tragende Wippenschenkel 13 der Lagerwippe 11 erstreckt sich - grob gesprochen - etwa senkrecht zu der Ausrichtung des Langlochs 24. Mit anderen Worten ausgedrückt ist die Wippachse 12 quer zur Längsrichtung des Langlochs 24 von Letzterem beabstandet, so dass der Anlenkbolzen 25 in dem Langloch 24 hin und her fahren kann, vgl. Fig. 2.

Mit seinem anderen Wippenschenkel 14, der zu dem zuvor genannten Wippenschenkel 13 etwa rechtwinklig abgewinkelt ist, erstreckt sich die Lagerwippe 11 nach vorne und springt über den Anbaubock 2 vor, so dass der Kopf des genannten Wippenschenkels 14 knapp vor dem Anbaubock 2 liegt, vgl. Fig. 2.

An der genannten Lagerwippe 11 greift eine Vorspannvorrichtung 10 an, die in der gezeichneten Ausführungsform einen Hydraulikzylinder 15 umfasst, der sich einerseits an dem vorspringenden Wippenschenkel 14 der Lagerwippe 11 abstützt und andererseits an dem Anbaubock 2 abgestützt ist. Genauer gesagt ist an dem Anbaubock 2 ein zur Vorderseite vorspringender Abstützflansch 26 starr befestigt, auf dem sich der Druckmittelzylinder 15 abstützt. Der genannte Druckmittelzylinder 15 erstreckt sich dabei vorteilhafterweise in etwa aufrechter Ausrichtung parallel zu dem ebenfalls aufrechten Träger 2a des Anbaubocks 2, so dass sich insgesamt eine sehr kompakte Anordnung ergibt.

Durch den genannten Druckmittelzylinder 15 ist der Oberlenkeranlenkpunkt 5 des Anbaupflugs 18 derart vorspannbar, dass im Pflugbetrieb permanent eine vorbestimmte Zugkraft im Oberlenker 7 induziert werden kann, die einerseits das Heck des Anbaupflugs 18 und das dort vorgesehene Stützrad 22 entlastet und umgekehrt am Schlepper 1 eine Reaktionskraft bewirkt, die die Antriebsräder des Schleppers 1 zusätzlich belastet und hierdurch die Traktion erhöht. Gemäß der in Fig. 2 gezeichneten Ausführungsform ist dabei der Druckmittelzylinder 15 in seine ausfahrende Stellung vorgespannt, so dass die in Fig. 2 zu sehende Lagerwippe 11 mit der Uhr rotatorisch vorgespannt ist, d.h. der Oberlenkeranlenkpunkt 5 ist von dem Oberlenker 7 weg vorgespannt.

Um den gewünschten Vorspanndruck im Druckmittelzylinder 15 bereit zu stellen, ist die entsprechende Druckmittelkammer des Druckmittelzylinders 15 mit einem Druckspeicher 27 verbindbar, der extern am Anbaupflug 18 vorgesehen, jedoch vorteilhafterweise auch in den Druckmittelzylinder 15 integriert sein kann. Beispielsweise kann ein Membranspeicher vorgesehen sein. Um den Druck und damit die Traktionserhöhung steuern zu können, ist dem Druckspeicher 27 eine Drucksteuervorrichtung 28 zugeordnet, die beispielsweise einen Druckregler umfassen kann. Vorteilhafterweise kann der Druckspeicher 27 auch mit einer Hydraulikleitung an die Schlepperhydraulik angeschlossen werden, so dass vom Schlepper der vom Druckspeicher 27 zur Verfügung gestellte Druck verändert werden kann.

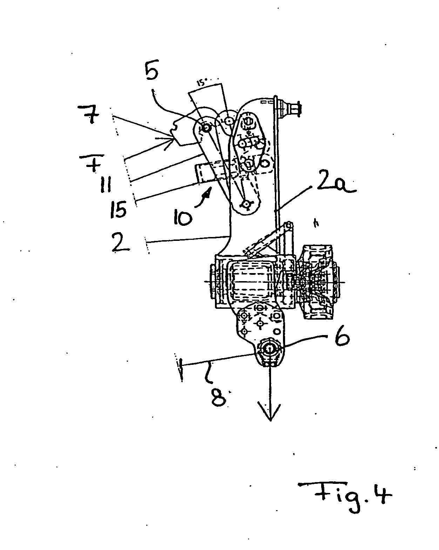

Alternativ zu der in den Fig. 2 und 3 gezeichneten Ausführung kann die Lagerwippe 11 auch in Form eines im Wesentlichen gerade verlaufenden Schwenkhebels ausgebildet sein, der mit seinem einen Ende schwenkbar um die Wippachse 12 am Anbaubock 2 gelagert ist und mit seinem anderen Ende den Oberlenkeranlenkpunkt 5 trägt. Als Vorspannvorrichtung 10 ist dabei vorteilhafterweise wiederum ein Druckmittelzylinder 15 vorgesehen, der einerseits am Anbaubock 2 und andererseits an der genannten Lagerwippe 11 angreift. Bei dem in Fig. 4 gezeichneten Ausführungsbeispiel ist dabei der Druckmittelzylinder 15 jedoch liegend angeordnet, so dass er sich im Wesentlichen quer zu der Längsachse der Lagerwippe 11 erstreckt und hierdurch eine gute Kraftumsetzung erreicht.

## Patentansprüche

1. Anbaupflug mit einem an einen Schlepper (1) anbaubaren Anbaubock (2), der einen Pflugschare (3) tragenden Pflugrahmen (4) trägt und Ober- und Unterlenkeranlenkpunkte (5, 6) zur Befestigung von am Schlepper (1) befestigten Ober- und Unterlenkern (7, 8) aufweist, mittels derer der Anbaubock (2) mit dem davon getragenen Pflugrahmen (4) nebst Pflugscharen (3) am Vorgewende und/oder zum Transport durch den Schlepper (1) vom Boden aushebbar ist, **dadurch gekennzeichnet, dass** zumindest einer der Ober- und Unterlenkeranlenkpunkte (5, 6) mittels einer Anlenkpunkt-Lagervorrichtung (9) gegenüber dem Anbaubock (2) beweglich gelagert ist, wobei eine Vorspannvorrichtung (10) zur elastischen Vorspannung des beweglich gelagerten Anlenkpunkts (5) gegenüber dem Anbaubock (2) in eine Entlastungsstellung vorgesehen ist, in der in der abgesenkten Arbeitsstellung des Pflugs das Pflugheck durch die Vorspannkraft der Vorspannvorrichtung (10) entlastet wird.

2. Anbaupflug nach dem vorhergehenden Anspruch, wobei der Oberlenkeranlenkpunkt (5) beweglich am Anbaubock (2) gelagert ist und die am Anbaubock (2) abgestützte Vorspannvorrichtung (10) eine Vorspannkraft auf den Oberlenkeranlenkpunkt (5) bereit stellt, die den Oberlenkeranlenkpunkt in eine Richtung von dem Oberlenker (7) weg und/oder auf den Pflugrahmen (4) zu vorspannt und im Oberlenker eine Zugkraft induziert.

3. Anbaupflug nach einem der vorhergehenden Ansprüche, wobei die Anlenkpunkt-Lagervorrichtung (9) eine Lagerwippe (11) aufweist, die an dem Anbaubock (2) um eine Wippachse (12) schwenkbar gelagert ist und an einem von der Wippachse (12) beabstandeten Wippenabschnitt den beweglichen Anlenkpunkt (5) trägt, wobei die Vorspannvorrichtung (10) einerseits an dem Anbaubock (2) und andererseits an der genannten Lagerwippe (11) angreift und die genannte Lagerwippe gegenüber dem Anbaubock vorspannt.

4. Anbaupflug nach dem vorhergehenden Anspruch, wobei die Lagerwippe (11) nach Art eines Kniehebels ausgebildet ist und zwei zueinander abgewinkelte Wippenschenkel (13,14) aufweist, wobei die Wippachse (12) im Bereich eines Verbindungsabschnittes zwischen den beiden Wippenschenkel (13 und 14) vorgesehen ist, wobei der eine Wippenschenkel (13) an seinem Ende den beweglichen Anlenkpunkt (5) trägt und wobei der andere Wippenschenkel (14) mit der Vorspannvorrichtung (10) verbunden ist, wobei sich die Lagerwippe (11) mit ihrem Anlenkpunkt (5) im Bereich eines Langlochs und/oder einer Kulisse des Anbaubocks (2) erstreckt und in dem genannten Langloch und/oder der Kulisse beweglich ist, das oder die die Bewegung des Anlenkpunktes (5) begrenzt.

5. Anbaupflug nach dem vorhergehenden Anspruch, wobei sich die Vorspannvorrichtung (10) mit ihrer Hauptachse und/oder ihrer Wippachse im Wesentlichen aufrecht und/oder parallel zu einer Hauptachse des Anbaubocks (2) erstreckt.

6. Anbaupflug nach einem der vorhergehenden Ansprüche, wobei die Lagerwippe (11) und die damit verbundene Vorspannvorrichtung (10) einen Nachrüstsatz bilden, der nachträglich am Anbaubock (2) montierbar ist.

7. Anbaupflug nach einem der vorhergehenden Ansprüche, wobei die Vorspannvorrichtung (10) einen Druckmittelzylinder (15) zur Erzeugung der Vorspannkraft umfasst.

8. Anbaupflug nach einem der vorhergehenden Ansprüche, wobei eine Einstellvorrichtung (16) zur Einstellung der zwischen dem Anbaubock (2) und dem beweglich gelagerten An)enkpunkt (5) wirkenden Vorspannkraft vorgesehen ist.

9. Anbaupflug nach dem vorhergehenden Anspruch, wobei die Einstellvorrichtung (16) eine Steuereinrichtung (17) zur Veränderung der Vorspannkraft in Abhängigkeit eines Antriebsradsschlupfs des Schleppers (1) und/oder eines den Antriebsradschlupf beeinflussenden Betriebsparameters aufweist, wobei die Einstellvorrichtung mit der Steuereinrichtung (17) verbundene Erfassungsmittel zur Erfassung des Radschlupfs und/oder des den Radschlupf beeinflussenden Betriebsparameters aufweist.

10. Anbaupflug nach dem vorhergehenden Anspruch, wobei die Steuereinrichtung (17) Steuermittel zur Erhöhung der Vorspannkraft mit zunehmendem Radschlupf am Schlepper und/oder zunehmender Pflugzugkraft aufweist.

11. Anbaupflug nach dem vorhergehenden Anspruch, wobei die Steuermittel einen Regler zur Regelung des Radschlupfs durch Einstellen der Vorspannkraft aufweisen.

## Claims

1. A mounted plough with a headstock (2) attachable to a tractor (1), which carries a plough frame (4) carrying a ploughshare (3) and includes upper and lower link articulation points (5, 6) for attachment of upper and lower links (7, 8) attached to the tractor (1), by means of which the headstock (2) with the plough frame (4) carried by the same along with ploughshares (3) at the headlands and/or for transport by the tractor (1) can be lifted from the ground, **characterized in that** at least one of the upper and lower link articulation points (5, 6) is movably mounted with respect to the headstock (2) by means of an articulation point bearing device (9), wherein a biasing device (10) is provided for elastically biasing the movably mounted articulation point (5) with respect to the headstock (2) into a relief position, in which in the lowered working position of the plough the rear of the plough is relieved by the biasing force of the biasing device (10).

2. The mounted plough according to the preceding claim, wherein the upper link articulation point (5) is movably mounted on the headstock (2) and the biasing device (10) supported on the headstock (2) provides a biasing force acting on the upper link articulation point (5), which biases the upper link articulation point in a direction away from the upper link (7) and/or towards the plough frame (4) and induces a traction in the upper link.

3. The mounted plough according to any of the preceding claims, wherein the articulation point bearing device (9) includes a bearing rocker (11) which is pivotally mounted on the headstock (2) about a rocking axis (12) and carries the movable articulation point (5) on a rocker portion spaced from the rocking axis (12), wherein the biasing device (10) on the one hand engages the headstock (2) and on the other hand engages said bearing rocker (11) and biases said bearing rocker with respect to the headstock.

4. The mounted plough according to the preceding claim, wherein the bearing rocker (11) is formed like a toggle lever and includes two rocker legs (13, 14) angled relative to each other, wherein the rocking axis (12) is provided in the region of a connecting portion between the two rocker legs (13 and 14), wherein the one rocker leg (13) at its one end carries the movable articulation point (5) and wherein the other rocker leg (14) is connected with the biasing device (10), wherein the bearing rocker (11) with its articulation point (5) extends in the region of an oblong hole and/or a coulisse of the headstock (2) and is movable in said oblong hole and/or the coulisse, which limits the movement of the articulation point (5).

5. The mounted plough according to the preceding claim, wherein the biasing device (10) with its main axis and/or its rocking axis extends substantially upright and/or parallel to a main axis of the headstock (2).

6. The mounted plough according to any of the preceding claims, wherein the bearing rocker (11) and the biasing device (10) connected therewith form a retrofit kit which can subsequently be mounted on the headstock (2).

7. The mounted plough according to any of the preceding claims, wherein the biasing device (10) comprises a pressure-medium cylinder (15) for producing the biasing force.

8. The mounted plough according to any of the preceding claims, wherein an adjusting device (16) is provided for adjusting the biasing force acting between the headstock (2) and the movably mounted articulation point (5).

9. The mounted plough according to the preceding claim, wherein the adjusting device (16) includes a control means (17) for varying the biasing force in dependence on a drive-wheel slip of the tractor (1) and/or an operating parameter influencing the drive-wheel slip, wherein the adjusting device includes detection means connected with the control means (17) for detecting the wheel slip and/or the operating parameter influencing the wheel slip.

10. The mounted plough according to the preceding claim, wherein the control means (17) includes control means for increasing the biasing force with increasing wheel slip at the tractor and/or increasing plough traction.

11. The mounted plough according to the preceding claim, wherein the control means include a controller for controlling the wheel slip by adjusting the biasing force.

## Revendications

1. Charrue portée, comportant un sabot d'attelage (2) qui est destiné à être monté sur un tracteur (1), porte un châssis de charrue (4) supportant un soc de charrue (3) et comporte des points d'articulation supérieur et inférieur (5, 6) pour la fixation des bras articulés supérieur et inférieur (7, 8) fixés au tracteur (1), au moyen desquels le sabot d'attelage (2) avec le châssis de charrue (4), porté par celui-ci, y compris les socs de charrue (3), peut être soulevé du sol en bout de champ et/ou pour le transport par le tracteur (1), **caractérisée en ce qu'**au moins un des points d'articulation supérieur et inférieur (5, 6) est monté mobile par rapport au sabot d'attelage (2) au moyen d'un palier à points d'articulation (9), un dispositif de précontrainte (10) étant prévu pour la précontrainte élastique du point d'articulation (5), monté mobile, par rapport au sabot d'attelage (2) dans une position de délestage, dans laquelle la partie arrière de la charrue, dans la position de travail abaissée de la charrue, est délestée sous l'effet de la force de précontrainte du dispositif de précontrainte (10).

2. Charrue portée selon la revendication précédente, dans laquelle le point d'articulation supérieur (5) est monté mobile sur le sabot d'attelage (2), et le dispositif de précontrainte (10), en appui sur le sabot d'attelage (2), applique une force de précontrainte sur le point d'articulation supérieur (5), par laquelle le point d'articulation supérieur (5) est précontraint dans une direction s'écartant du bras articulé supérieur (7) et/ou s'avançant vers le châssis de charrue (4) et induit une force de traction dans le bras articulé supérieur.

3. Charrue portée selon l'une quelconque des revendications précédentes, dans laquelle le palier à points d'articulation (9) comporte un berceau de palier (11), qui est monté sur le sabot d'attelage (2) de manière à pouvoir pivoter autour de son axe (12) et qui, sur une partie écartée de l'axe (12), porte le point d'articulation (5) mobile, ledit dispositif de précontrainte (10) entrant en contact, d'une part, avec le sabot d'attelage (2) et, d'autre part, avec ledit berceau de palier (11) et précontraint ledit berceau de palier par rapport au sabot d'attelage.

4. Charrue portée selon la revendication précédente, dans laquelle le berceau de palier (11) est réalisé sous la forme d'un levier à genouillère et comporte deux bras (13, 14) coudés l'un par rapport à l'autre, l'axe (12) du berceau étant prévu dans la zone d'une partie de liaison entre les deux bras (13 et 14), l'un des bras (13) portant le point d'articulation (5) mobile au niveau de son extrémité et l'autre bras (14) étant relié au dispositif de précontrainte (10), ledit berceau de palier (11) s'étendant avec son point d'articulation (5) dans la zone d'un trou oblong et/ou d'une coulisse du sabot d'attelage (2) et étant mobile dans ledit trou oblong et/ou dans ladite coulisse, lesquels limitent le mouvement du point d'articulation (5).

5. Charrue portée selon la revendication précédente, dans laquelle le dispositif de précontrainte (10) avec son axe principal et/ou son axe de berceau s'étend sensiblement perpendiculairement et/ou parallèlement à l'axe principal du sabot d'attelage (2).

6. Charrue portée selon l'une quelconque des revendications précédentes, dans laquelle le berceau de palier (11) et le dispositif de précontrainte (10), relié à celui-ci, forment un ensemble de post-équipement qui peut être monté ultérieurement sur le sabot d'attelage (2).

7. Charrue portée selon l'une quelconque des revendications précédentes, dans laquelle le dispositif de précontrainte (10) comporte un vérin à pression (15) destiné à générer la force de précontrainte.

8. Charrue portée selon l'une quelconque des revendications précédentes, dans laquelle il est prévu un dispositif de réglage (16) destiné à régler la force de précontrainte agissant entre le sabot d'attelage (2) et le point d'articulation (5) monté mobile.

9. Charrue portée selon la revendication précédente, dans laquelle le dispositif de réglage (16) comporte un dispositif de commande (17) pour faire varier la force de précontrainte en fonction du patinage d'une roue motrice du tracteur (1) et/ou d'un paramètre de service influant sur le patinage d'une roue motrice, ledit dispositif de réglage comportant des moyens de détection, reliés au dispositif de commande (17) et destinés à détecter le patinage d'une roue et/ou le paramètre de service influant sur le patinage d'une roue.

10. Charrue portée selon la revendication précédente, dans laquelle le dispositif de commande (17) comporte des moyens de commande pour accroître la force de précontrainte lorsque le patinage d'une roue du tracteur augmente et/ou lorsque la force de traction du tracteur augmente.

11. Charrue portée selon la revendication précédente, dans laquelle les moyens de commande comportent un régulateur destiné à réguler le patinage d'une roue au moyen du réglage de la force de précontrainte.
